# EUROPÄISCHE PATENTANMELDUNG

(11) **EP 4 067 689 A1**
(43) Veröffentlichungstag der Anmeldung: **05.10.2022**
(21) Anmeldenummer: 22159777.6
(22) Anmeldetag: 02.03.2022
(51) Int. Cl.: F16F 1/36, D06F 37/22

(54) **DÄMPFUNGSBAUTEIL FÜR EIN HAUSHALTSGERÄT ZUR PFLEGE VON WÄSCHESTÜCKEN MIT SPEZIFISCHEN ELASTISCHEN MATERIAL, SOWIE HAUSHALTSGERÄT**

(30) Priorität: 11.03.2021 DE 102021202353
(71) Anmelder: BSH Hausgeräte GmbH, 81739 München (DE)
(72) Erfinder: Heine, Christopher, 13591 Berlin (DE); Plagemann, Markus, 12355 Berlin (DE); Schön, Marco, 13435 Berlin (DE)

(57) **Zusammenfassung**

Ein Aspekt der Erfindung betrifft ein Dämpfungsbauteil (13) für ein Haushaltsgerät (1) zur Pflege von Wäschestücken, welches zur Dämpfung von Schwingungen eines Schwingsystems (6) des Haushaltsgeräts (1) ausgebildet ist, wobei das Dämpfungsbauteil (13) zumindest einen Bauteilbereich (18, 21) aus einem elastischen Material mit einem Verlustfaktor größer 0,4 aufweist.

## Beschreibung

Ein Aspekt der Erfindung betrifft ein Dämpfungsbauteil für ein Haushaltsgerät zur Pflege von Wäschestücken. Das Dämpfungsbauteil ist bestimmungsgemäß zur Dämpfung von Schwingungen eines Schwingsystems des Haushaltsgeräts ausgebildet. Ein weiterer Aspekt der Erfindung betrifft ein Haushaltsgerät zur Pflege von Wäschestücken.

Derartige Haushaltsgeräte sind als Waschmaschinen oder Waschtrockner bekannt. Eine Wäschetrommel wird im Betrieb rotiert. Die Wäschetrommel ist Bestandteil des Schwingsystems. Sie ist mittels Dämpfungsbauteilen schwingend gelagert.

Das Schwingsystem kann vereinfacht als ein Ein-Massen-Schwinger betrachtet werden. Bei diesem Aufbau enthält das System mindestens ein Massenelement, ein Federelement und mindestens ein Dämpfungselement beziehungsweise ein Dämpfungsbauteil. Das Verhältnis aus Masse zu Steifigkeit bestimmt die sogenannte Eigenfrequenz. Bei diesbezüglich schwingenden Systemen bei einem derartigen Haushaltsgerät existiert ein Resonanzbereich, der zwischen 180 Umdrehungen pro Minute und 450 Umdrehungen pro Minute liegt. In diesem Bereich schwingt sich das Schwingsystem auf und es treten große Bewegungsamplituden auf.

Um dem entgegenzuwirken werden in derartigen Haushaltsgeräten Dämpfungselemente beziehungsweise Dämpfungsbauteile eingesetzt. Beispielsweise ist eine Manschette eines derartigen Haushaltsgeräts ein derartiges Dämpfungsbauteil. Es ist bekanntermaßen aus vollelastischem Material ausgebildet und kann diesbezüglich jeder Bewegung folgen und dämpfen. Darüber hinaus sind in einem derartigen Haushaltsgerät auch weitere Dämpfungsbauteile bekannt, wie beispielsweise Reibdämpfer oder ein Freilaufdämpfer. Es sind üblicherweise stabförmige Dämpfer, die einen Dämpferzylinder aufweisen, in den ein Dämpferkolben axial bewegbar gelagert ist. Diesbezüglich können bei derartigen Dämpfungsbauteilen Dämpfungen in axialer Richtung auftreten.

Um nun jedoch der Bewegung des Schwingsystems folgen zu können, werden elastische Anbindungen benötigt. Dies bedeutet, dass an Schnittstellen zwischen einem derartigen Dämpfer und weiteren Komponenten des Haushaltsgeräts elastische Koppelelemente angeordnet sind. Beispielsweise können dies rohrförmige beziehungsweise hohlzylinderförmige Buchsen aus einem elastischen Material sein. Die klassische Wahl für derartige elastische Bauteile fällt üblicherweise auf ein Elastomer. Für die oben genannten Manschetten zum Beispiel wird in den meisten Fällen ein EPDM (Ethylen-Prophylen-Dien (Monomer)-Kautschuk), ein Silikon oder ein NBR (Acrylnitrid-Buthadien-Kautschuk) verwendet. Bei den genannten Dämpferbuchsen kommt üblicherweise ein TPE (Thermoplastisches Elastomer) zum Einsatz.

Bei diesen bekannten Materialien ist der Fokus jedoch auf die geometrischen Ausmaße und die Shorehärte (Shore A) gerichtet. Die dynamischen Eigenschaften des Materials bleiben dabei unberücksichtigt.

Es ist Aufgabe der vorliegenden Erfindung, ein Dämpfungsbauteil zu schaffen, welches bezüglich der Dämpfungswirkung in spezifischen Drehzahlbereichen und dadurch einhergehenden Schwingungen eines Schwingsystems eines Haushaltsgeräts zur Pflege von Wäschestücken, verbessert ist. Ebenso ist es Aufgabe der vorliegenden Erfindung, ein entsprechendes Haushaltsgerät zur Pflege von Wäschestücken zu schaffen.

Ein Aspekt der Erfindung betrifft ein Dämpfungsbauteil für ein Haushaltsgerät zur Pflege von Wäschestücken. Das Dämpfungsbauteil ist zur Dämpfung von Schwingungen eines Schwingsystems des Haushaltsgeräts ausgebildet. Das Dämpfungsbauteil weist zumindest einen Bauteilbereich aus einem elastischen Material mit einem Verlustfaktor tan δ > 0,4 auf. Durch ein derartiges Dämpfungsbauteil mit einem diesbezüglich spezifischen materiellen Bereich ist eine Verbesserung der Schwingungsdämpfung erreicht. Insbesondere auch in ganz spezifischen Frequenzbereichen die sich unterhalb von 30 Hz befinden. Der Verlustfaktor tan δ wird aus dem bekannten Quotienten des Verlustmoduls G" und des Speichermoduls G' gebildet.

Zur Ermittlung dieser Werte können bekannte Verfahren durchgeführt werden. Beispielsweise sei hier die DMA (Dynamisch-Mechanische-Analyse) genannt. Bei dieser Methode wird ein Teststreifen des Materials dynamisch belastet und es wird die Kraftantwort bei aufgebrachter Sinusverformung für eine bestimmte Frequenz gemessen. Diese Messung wird für den jeweiligen Frequenzbereich durchgeführt, sodass dann die Frequenzabhängigkeit der Materialeigenschaften bestimmt werden kann.

Für ein Haushaltsgerät zur Pflege von Wäschestücken als Ganzes betrachtet ist hier der Frequenzbereich von < 0 Hz bis etwa 30 Hz wesentlich. Fokus ist in dem Zusammenhang auf Frequenzen unter 10 Hz, insbesondere im Bereich zwischen 3 Hz und 8 Hz gelegt. Bei dieser DMA werden die Kraftamplitude, die Verformungsamplitude sowie die Phasenverschiebung zwischen dem Kraft- und dem Verformungssignal gemessen. Als Ergebnis liefert diese DMA den komplexen Modul der Probe.

Darüber hinaus ist als entsprechende Methode die DMTA (Dynamisch-Mechanische-Thermo-Analyse) zu nennen. Bei dieser Vorgehensweise wird das Material auch noch unterschiedlichen Temperaturen ausgesetzt. Aus den Messwerten können die viskoelastischen Eigenschaften des Probenmaterials als Funktion von Zeit und Temperatur bestimmt werden. Neben der Glasübergangstemperatur sind dies das Elastizitätsmodul und das Schubmodul.

Insbesondere kann diese Analyse mit einem Rotationsrheometer durchgeführt werden. Beispiel für ein derartiges Rotationsrheometer ist das Gerät ARES-G2. Mit diesem kann beispielsweise eine sinusförmige Torsionsanregung für das zu testende Material erzeugt werden.

Indem ein Material genutzt wird, welches diesen spezifischen Wert des Verlustfaktors tan δ aufweist kann gerade in dem oben genannten kritischen Resonanzbereich der Drehung der Wäschetrommel die Dämpfung verbessert werden.

Durch ein derartiges Material mit einem diesbezüglichen Fokus auf den Verlustfaktor tan δ und darüber hinaus auch noch einer spezifischen Wertgröße, nämlich > 0,4 wird der Fokus des Materialeinsatzes bei einem derartigen Dämpfungsbauteil nicht mehr auf die Shorehärte und die Geometrie gerichtet, sondern gerade auf diesen ganz spezifischen Materialparameter des Verlustfaktors. Dadurch kann mit der besseren Dämpfungseigenschaft die Geometrie des Dämpfungsbauteils dahingehend individualisiert werden, dass der Materialeinsatz bei gleichbleibender Funktionalität reduziert werden kann. Des Weiteren kann durch die diesbezüglich verbesserten Materialeigenschaften das Bewegungsverhalten des Schwingsystems positiv beeinflusst werden. Dies bedeutet insbesondere, dass eine Reduktion der Amplituden innerhalb einem Durchlaufen der Resonanz erreicht wird, wodurch auch der benötigte Bauraum für das Schwingsystem kleiner wird.

In einem Ausführungsbeispiel weist der Verlustfaktor tan δ einen Wert zwischen > 0,4 und 0,9 auf. Dieses Intervall ist besonders vorteilhaft bezüglich der oben genannten, erreichbaren Vorteile.

In einem Ausführungsbeispiel ist der Bauteilbereich aus einem elastischen Material mit einer Verluststeifigkeit G" mit einem Wert größer 1,5 × 10⁶ Pa ausgebildet. Dieser weitere Parameterwert, der im Zusammenhang mit dem Bestimmen des Verlustfaktors steht, gibt weitere Vorteile, wie sie oben genannt wurde, für ein diesbezüglich spezifisches Material mit den verbesserten genannten Eigenschaften.

Grundsätzlich gilt für den Verlustfaktor tan δ der Zusammenhang:
tan δ = G'/G". Dabei bezeichnet G' die Speichersteifigkeit und G" die Verluststeifigkeit.

In einem Ausführungsbeispiel ist die Speichersteifigkeit G' mit einem Wert < 1,5 × 10⁶ Pa bei dem Bauteilbereich ausgebildet. Auch dies ist eine entsprechende vorteilhafte Ausgestaltung, die das diesbezügliche vorteilhafte elastische Material, insbesondere im Bauteilbereich, charakterisiert.

Vorzugsweise ist der Bauteilbereich aus einem elastischen Material mit einer Speichersteifigkeit G' zwischen 1,6 × 10⁶ Pa und 3,7 mal 10⁶ Pa ausgebildet.

In einem Ausführungsbeispiel weist der Bauteilbereich zumindest anteilig Buthyl auf. Ein derartiges elastisches Material ermöglicht zumindest in spezifischer Ausgestaltung und Zusammensetzung Parameterwerte für den Verlustfaktor, die Speichersteifigkeit und die Verluststeifigkeit, wie sie oben genannt wurden. Diesbezüglich ist eine individuelle Ausgestaltung und Zusammensetzung des Bauteilbereichs ermöglicht.

In einem Ausführungsbeispiel weist der Bauteilbereich zumindest den Verlustfaktor mit seinem oben genannten Wert bei einer Schwingung mit den Frequenzen zwischen < 0 Hz und ≤ 30 Hz. Insbesondere weist der Bauteilbereich diesen Wert des Verlustfaktors bei Schwingungen zwischen 3 Hz und 8 Hz auf. Dies ist besonders vorteilhaft, da dies die relevanten Frequenzen sind, die beim Durchfahren des Resonanzbereichs des Schwingsystems des Haushaltsgeräts zur Pflege von Wäschestücken sind. Gerade in diesen Betriebssituationen des Haushaltsgeräts kann durch dieses vorgeschlagene Dämpfungsbauteil mit diesem ganz spezifischen elastischen Material des Bauteilbereichs ein wesentlicher Vorteil bezüglich der Schwingungsdämpfung erreicht werden.

In einem Ausführungsbeispiel ist das Dämpfungsbauteil eine Manschette für das Haushaltsgerät zur Pflege von Wäschestücken. Diese ist zwischen einer Frontwand beziehungsweise einer Vorderwand mit einem Loch und der Wäschetrommel angeordnet. Die Manschette stellt in dem Zusammenhang einen elastischen Ring dar. Mit diesem ist die genannte Schnittstelle als Verbindungselement geschlossen.

In einem Ausführungsbeispiel ist das Dämpfungsbauteil als ein stabförmiger Dämpfer ausgebildet. Dieser weist insbesondere einen Dämpferzylinder und einen axial darin bewegbaren und dazu separaten Schaft auf. Dieser Schaft ist stabförmig ausgebildet. An einem Ende des Schafts ist eine Koppelöse zum mechanischen Koppeln mit einer weiteren Haushaltsgerätekomponente ausgebildet. Die Koppelöse weist den Bauteilbereich aus dem elastischen Material auf. Insbesondere kann eine derartige Koppelöse ein hohlzylinderförmiges Bauteil, wie diesbezüglich eine elastische Buchse sein. Zusätzlich oder anstatt dazu kann an einem Ende des Dämpferzylinders eine Koppelöse zum mechanischen Koppeln mit einer weiteren Haushaltsgerätekomponente ausgebildet sein, wobei die Koppelöse den Bauteilbereich aus dem elastischen Material aufweist. Ein derartiger, stabförmiger Dämpfer mit einer axialen Kompressions- und Expansionsmöglichkeit, durch welche die Dämpfungsfunktion realisiert ist, kann ebenfalls Bestandteil des Schwingsystems sein. Insbesondere kann dadurch ein Laugenbehälter an einem Boden des Gehäuses des Haushaltsgeräts schwingungsgedämpft gelagert sein.

Ein weiterer unabhängiger Aspekt der Erfindung betrifft ein Dämpfungsbauteil für ein Haushaltsgerät zur Pflege von Wäschestücken, welches zur Dämpfung von Schwingungen eines Schwingsystems des Haushaltsgeräts ausgebildet ist, wobei das Dämpfungsbauteil zumindest einen Bauteilbereich aus einem elastischen Material mit einer Verluststeifigkeit G" mit einem Wert größer 1,5 × 10⁶ Pa aufweist und/oder mit einer Speichersteifigkeit G' mit einem Wert < 1,5 × 10⁶ Pa aufweist. Auch dies ist eine entsprechende vorteilhafte Ausgestaltung, die das diesbezügliche vorteilhafte elastische Material, insbesondere im Bauteilbereich, charakterisiert.

Vorzugsweise ist der Bauteilbereich aus einem elastischen Material mit einer Speichersteifigkeit G' zwischen 1,6 × 10⁶ Pa und 3,7 mal 10⁶ Pa ausgebildet.

Ausführungsbeispiele eines unabhängigen Aspekts sind als vorteilhafte Ausführungsbeispiele der anderen Aspekte anzusehen.

Ein weiterer Aspekt der Erfindung betrifft ein Haushaltsgerät zur Pflege von Wäschestücken. Dieses Haushaltsgerät kann eine Waschmaschine oder ein Waschtrockner sein. Das Haushaltsgerät weist ein Schwingsystem auf. Eine Wäschetrommel des Haushaltsgeräts kann Bestandteil des Schwingsystems sein. Ebenso ist ein Dämpferbauteil gemäß dem oben genannten Aspekt oder einem vorteilhaften Ausführungsbeispiel davon Bestandteil eines derartigen Schwingsystems. Das Haushaltsgerät kann darüber hinaus auch einen Laugenbehälter aufweisen. In diesem ist die dazu separate Wäschetrommel angeordnet.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:
- Fig. 1: Eine Explosionsdarstellung von Teilkomponenten eines Ausführungsbeispiels eines erfindungsgemäßen Haushaltsgeräts zur Pflege von Wäschestücken; und
- Fig. 2: eine perspektivische Darstellung eines Ausführungsbeispiels eines erfindungsgemäßen Dämpfungsbauteils.

In den Figuren werden gleiche oder funktionsgleiche Elemente mit den gleichen Bezugszeichen versehen.

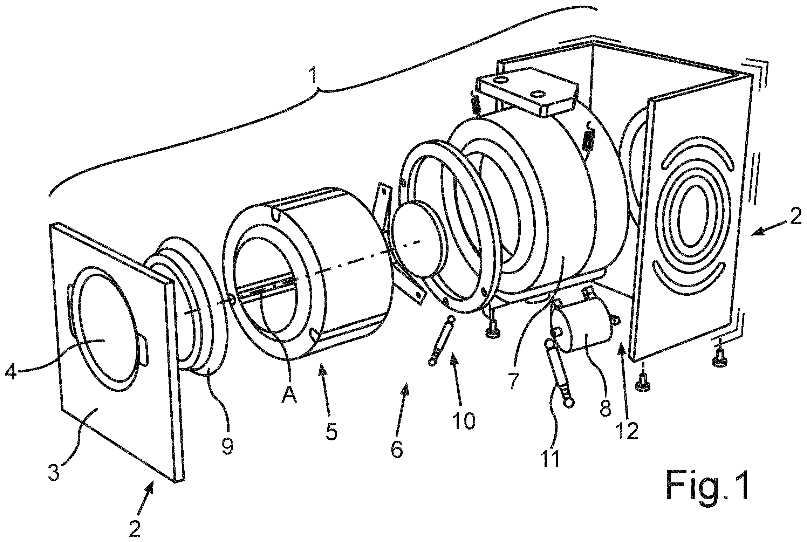

In Fig. 1 ist in einer Explosionsdarstellung ein Haushaltsgerät 1 zur Pflege von Wäschestücken gezeigt. Das Haushaltsgerät 1 ist hier eine Waschmaschine. Es weist ein Gehäuse 2 auf. Das Gehäuse 2 weist eine Vorderwand beziehungsweise eine Frontwand 3 auf. In der Frontwand 3 ist eine Öffnung 4 ausgebildet. Durch diese Öffnung 4, die durch ein nicht gezeigtes Bullauge frontseitig verschlossen werden kann, ist eine Beschickungsöffnung gebildet, durch welche Wäschestücke in eine Wäschetrommel 5 des Haushaltsgeräts 1 eingebracht und entnommen werden können. Die Wäschetrommel 5 ist insbesondere Bestandteil eines Schwingsystems 6 des Haushaltsgeräts 1. Insbesondere weist das Haushaltsgerät 1 auch einen Laugenbehälter 7 auf. Dieser nimmt die Wäschetrommel 5 auf. Der Laugenbehälter 7 ist ebenfalls Bestandteil des Schwingsystems 6. Des Weiteren weist das Haushaltsgerät 1 einen Motor 8 auf. Mittels diesem Motor 8 kann ein Koppelsystem angetrieben werden, mit welchem wiederum die Wäschetrommel 5 zur Rotation um eine horizontale Achse A gedreht werden kann.

Darüber hinaus weist das Haushaltsgerät 1 eine Manschette 9 auf. Diese ist an der Schnittstelle zwischen der Wäschetrommel 5 und dem Laugenbehälter 7 angeordnet und ist diesbezüglich auch zwischen der Frontwand 3 und der Wäschetrommel 5 angeordnet. Die Manschette 9 ist als Ring ausgebildet und aus einem elastischen Material gebildet. Diese Manschette 9 stellt ein Beispiel für ein Dämpfungsbauteil des Schwingsystems 6 dar.

Darüber hinaus weist das Haushaltsgerät 1 stabförmige Dämpfer 10 und 11 auf. Diese sind mit einer Unterseite des Laugenbehälters 7 verbunden. Andererseits sind sie beispielsweise mit einem Boden 12 des Gehäuses 2 verbunden. Derartige Dämpfer sind ebenfalls Bestandteil des Schwingsystems 6.

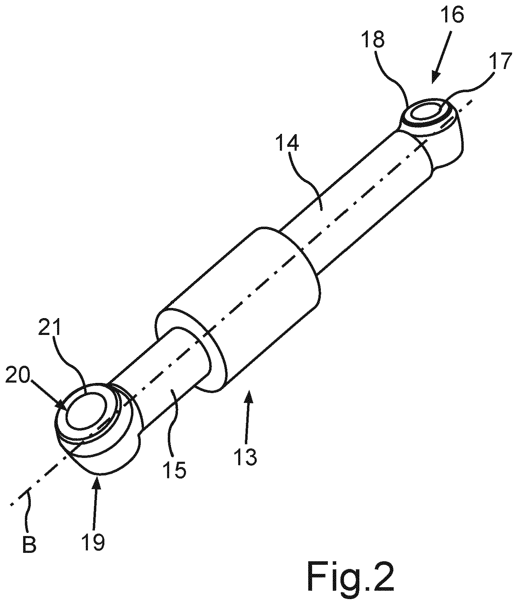

In Fig. 2 ist ein Ausführungsbeispiel eines Dämpfungsbauteils 13 gezeigt. Dieses ist hier als ein Ausführungsbeispiel eines Dämpfers 10 oder 11 realisiert. Dieses Dämpfungsbauteil 13 weist in einer stabförmigen Ausgestaltung einen Dämpferzylinder 14 auf. Dieser ist zumindest bereichsweise hohl. Das Dämpfungsbauteil 13 weist darüber hinaus einen bewegbaren Schaft 15 auf. Dieser ist kolbenartig ausgebildet. Er erstreckt sich in das Innere des dazu separaten Dämpferzylinders 14. Dieses stabförmige Dämpferbauteil 13 weist eine Längsachse B auf. Entlang dieser Längsachse B sind der Dämpferzylinder 14 und der Schaft 15 relativ zueinander bewegbar. Dadurch tritt dann die entsprechende Dämpfungswirkung auf. Der Dämpferzylinder 14 weist an einem dem Schaft 15 abgewandten Ende 16 eine Koppelöse 17 auf. Diese ist bestimmungsgemäß zum mechanischen Koppeln mit einer weiteren Haushaltsgerätekomponente ausgebildet. Sie kann in dem Zusammenhang mit dem Laugenbehälter 7 mechanisch gekoppelt sein. Die Koppelöse 17 weist in einem Ausführungsbeispiel einen Bauteilbereich 18 auf, der aus einem elastischen Material ausgebildet ist. Dieser Bauteilbereich 18 kann ein Hohlzylinder oder eine Buchse sein.

Zusätzlich oder anstatt dazu weist der Schaft 15 ein Ende 19 auf, welches dem Dämpferzylinder 14 abgewandt ist. An diesem Ende 19 ist eine Koppelöse 20 ausgebildet, die bestimmungsgemäß zum Koppeln mit einer weiteren Haushaltsgerätekomponente, hier beispielsweise einen Boden 12, ausgebildet ist. Diese Koppelöse 20 weist einen Bauteilbereich 21 auf, der aus einem elastischen Material ausgebildet ist. Auch dieser Bauteilbereich 21 kann ein Hohlzylinder beziehungsweise eine Buchse sein. Er ist in ein entsprechendes rohrförmiges Loch beziehungsweise in eine entsprechende Aussparung, die in der Koppelöse 20 ausgebildet ist, angeordnet. Die Koppelöse 20 und der Bauteilbereich 21 sind insbesondere unterschiedliche Komponenten. Sie sind auch aus einem unterschiedlichen Material ausgebildet. Insbesondere ist der einstückige Schaft 15 mit der Koppelöse 20 aus einem Metall ausgebildet. Entsprechend kann dies bei dem Dämpferzylinder 14 vorgesehen sein. Auch dort ist insbesondere der Bauteilbereich 18 eine separate Komponente, die in ein entsprechendes rohrförmiges Loch in der Koppelöse 17 eingebracht ist.

Das Material des Bauteilbereichs 18 und/oder 21 ist ein elastisches Material mit einem Verlustfaktor tan δ > 0,4, insbesondere zwischen > 0,4 und 0,9. Dieses elastische Material weist in einem Ausführungsbeispiel eine Verluststeifigkeit > 1,5 × 10⁶ Pa auf. In einem Ausführungsbeispiel weist die Speichersteifigkeit des elastischen Materials einen Wert > 1,5 × 10⁶ Pa auf. Insbesondere beträgt der Wert der Speichersteifigkeit dieses elastischen Materials zwischen 1,6 × 10⁶ Pa und 3,7 × 10⁶ Pa.

Insbesondere sind dadurch verbesserte Dämpfungseigenschaften dieser Buchsen ermöglicht. Die rotatorischen Bewegungen des Schwingsystems 6 werden stärker gedämpft und somit auch reduziert. Eine Reduzierung der rotatorischen Bewegungen erzeugt einen geringeren benötigten Bauraum des Schwingsystems 6.

Diese spezifischen elastischen Materialien mit den genannten Werten für die spezifischen Parameter ermöglichen auch die Montagesituation seitens des Laugenbehälters 7 anzupassen und zu verbessern. Dabei können diese höheren Dämpfungseigenschaften dazu führen, dass ein Verpressen von vorhandenen Gummibuchsen auf den Laugenbehälter 7 nicht mehr in dem Maße benötigt wird, wie es bei den herkömmlichen Dämpfern mit diesbezüglich weniger tauglichen Materialien durchgeführt wird. Dadurch können auch Montagenachteile des Dämpfungsbauteils selbst reduziert werden. Darüber hinaus ist es durch das Dämpfungsbauteil in Form der Manschette 9, die aus einem entsprechend ausgebildeten elastischen Material sein kann, erreicht, dass Unwuchtpositionen von Wäsche in der Wäschetrommel ebenfalls besser gedämpft und kompensiert werden können. Das Haushaltsgerät ist in dem Zusammenhang dann unempfindlicher gegen derartige Unwuchtmassen in der Wäschetrommel und der Schleudervorgang kann schneller durchgeführt werden. Dadurch ist auch ein verbessertes Standverhalten des Haushaltsgeräts, insbesondere im Schleuderbetrieb, ermöglicht. Eine derartige verbesserte Unwuchtverträglichkeit führt auch zu einer kürzeren Wäscheverteilungszeit in der Wäschetrommel, da die Wäsche schneller zum Schleudern geführt werden kann und somit diese gewonnene Zeit für das eigentliche Waschen der Wäschestücke in der Wäschetrommel genutzt werden kann.

### Bezugszeichenliste

- 1: Haushaltsgerät
- 2: Gehäuse
- 3: Frontwand
- 4: Öffnung
- 5: Wäschetrommel
- 6: Schwingsystem
- 7: Laugenbehälter
- 8: Motor
- 9: Manschette
- 10: Dämpfer
- 11: Dämpfer
- 12: Boden
- 13: Dämpferbauteil
- 14: Dämpferzylinder
- 15: Schaft
- 16: Ende
- 17: Koppelöse
- 18: Bauteilbereich
- 19: Ende
- 20: Koppelöse
- 21: Bauteilbereich

## Patentansprüche

1. Dämpfungsbauteil (13) für ein Haushaltsgerät (1) zur Pflege von Wäschestücken, welches zur Dämpfung von Schwingungen eines Schwingsystems (6) des Haushaltsgeräts (1) ausgebildet ist, **dadurch gekennzeichnet, dass** das Dämpfungsbauteil (13) zumindest einen Bauteilbereich (18, 21) aus einem elastischen Material mit einem Verlustfaktor größer 0,4 aufweist.

2. Dämpfungsbauteil (13) nach Anspruch 1, **dadurch gekennzeichnet, dass** der Verlustfaktor zwischen größer 0,4 und 0,9 beträgt.

3. Dämpfungsbauteil (13) nach Anspruch 1 oder 2, **dadurch gekennzeichnet, dass** der Bauteilbereich (18, 21) aus einem elastischen Material mit einer Verluststeifigkeit größer 1,5 × 10⁶ Pa ausgebildet ist.

4. Dämpfungsbauteil (13) nach einem der vorhergehenden Ansprüche, **dadurch gekennzeichnet, dass** die Speichersteifigkeit des elastischen Materials größer 1,5 × 10⁶ Pa beträgt.

5. Dämpfungsbauteil (13) nach Anspruch 4, **dadurch gekennzeichnet, dass** der Bauteilbereich (18, 21) aus einem elastischen Material mit einer Speichersteifigkeit zwischen 1,6 × 10⁶ Pa und 3,7 × 10⁶ Pa ausgebildet ist.

6. Dämpfungsbauteil (13) nach einem der vorhergehenden Ansprüche, **dadurch gekennzeichnet, dass** der Bauteilbereich (18, 21) Buthyl aufweist.

7. Dämpfungsbauteil (13) nach einem der vorhergehenden Ansprüche, **dadurch gekennzeichnet, dass** der Bauteilbereich (18, 21) ringförmig oder rohrförmig ausgebildet ist.

8. Dämpfungsbauteil (13) nach einem der vorhergehenden Ansprüche, **dadurch gekennzeichnet, dass** der Bauteilbereich (18, 21) den Verlustfaktorwert bei einer Schwingung mit den Frequenzen zwischen größer 0 Hz und kleiner oder gleich 30 Hz aufweist.

9. Dämpfungsbauteil (13) nach einem der vorhergehenden Ansprüche, **dadurch gekennzeichnet, dass** es eine Manschette (9) für das Haushaltsgerät (1) zur Pflege von Wäschestücken ist.

10. Dämpfungsbauteil (13) nach einem der vorhergehenden Ansprüche, **dadurch gekennzeichnet, dass** es ein stabförmiger Dämpfer (10, 11) mit einem Dämpferzylinder (14) und einem axial darin bewegbaren Schaft (15) aufweist, wobei an einem Ende (19) des Schafts (15) eine Koppelöse (20) zum mechanischen Koppeln mit einer weiteren Haushaltsgerätekomponente (7, 12) ausgebildet ist, wobei die Koppelöse (20) den Bauteilbereich (18, 21) aus dem elastischen Material aufweist, und/oder an einem Ende (16) des Dämpferzylinders (14) eine Koppelöse (17) zum mechanischen Koppeln mit einer weiteren Haushaltsgerätekomponente (7, 12) ausgebildet ist, wobei die Koppelöse (17) den Bauteilbereich (18, 21) aus dem elastischen Material aufweist.

11. Haushaltsgerät (1) zur Pflege von Wäschestücken, mit einer Wäschetrommel (5) und einem Schwingsystem (6) und mit einem Dämpfungsbauteil (13) nach einem der vorhergehenden Ansprüche.
